# EUROPÄISCHE PATENTSCHRIFT

(11) **EP 1 862 352 B1**
(45) Veröffentlichungstag und Bekanntmachung des Hinweises auf die Patenterteilung: **04.11.2015**
(21) Anmeldenummer: 07005642.9
(22) Anmeldetag: 20.03.2007
(51) Int. Cl.: B60N 2/48

(54) **Kopfstütze für Fahrzeuge**
Head support for vehicles
Appui-tête pour véhicule automobile

(30) Priorität: 31.05.2006 DE 102006025741; 13.06.2006 DE 102006027646
(43) Veröffentlichungstag der Anmeldung: 05.12.2007
(73) Patentinhaber: GRAMMER AG, 92224 Amberg (DE)
(72) Erfinder: Keller, Hubert, 92224 Amberg (DE); Hoffmann, Markus, 92245 Kümmersbruck (DE)
(74) Vertreter: Roche, von Westernhagen & Ehresmann

(56) Entgegenhaltungen:
- WO-A-03/057526
- DE-U1- 20 207 115
- US-A1- 2005 242 640

## Beschreibung

Eine solche Kopfstütze ist bekannt aus der DE 102 36 259 A1. Die bekannte Kopfstütze weist einen Polsterträger auf, welcher um eine Schwenkachse schwenkbar an Tragstangen gehalten ist, die an der Rückenlehne befestigt sind. Der Polsterträger kann zwischen einer Gebrauchsposition und einer Nichtgebrauchsposition verschwenkt werden, wobei der Polsterköper in der Gebrauchsposition eine Anlagefläche für den Kopf eines Fahrzeuginsassen bereitstellt. Durch Verschwenken des Polsterträgers einer Kopfstütze eines hinteren Fahrzeugsitzes in die Nichtgebrauchsposition hat der Fahrer, wenn sich kein Fahrgast im Fahrzeug befindet, eine bessere Sicht aus dem Heckfenster.

Um ein ungewolltes Verschwenken des Polsterträgers zu verhindern, ist die Kopfstütze in der Gebrauchsposition verriegelbar. Ein Entriegeln ist möglich, indem durch Druck auf einen Betätigungsschieber ein Riegelelement translatorisch aus der Verriegelungslage in die Freigabelage überführbar ist, wobei in der Freigabelage ein Verschwenken des Polsterträgers möglich ist.

Aus der DE 20 2004 004 251 U1 ist eine Kopfstütze bekannt, wobei der Polsterträger verschwenkbar an einem Tragstangenbügel gelagert ist und in einer Gebrauchs- und einer Nichtgebrauchsposition arretierbar ist. An dem Polsterträger ist ein Verriegelungsstift translatorisch verschiebbar gelagert. Der Verriegelungsstift weist an einem Endbereich einen Endabschnitt auf, der mit Ausnehmungen einer am Tragstangenbügel befestigten Verriegelungsscheibe zusammenwirkt. Durch Druck auf einen Betätigungsknopf kann der Verriegelungsstift translatorisch aus der Ausnehmung der Verriegelungsscheibe bewegt werden, wodurch die Verriegelung gelöst wird und der Polsterträger verschwenk werden kann.

Aus der US 2005/0242640 A1 ist eine verschwenkbare Kopfstütze bekannt, die Merkmale des Oberbegriffs des Anspruchs 1 aufweist.

In der DE 202 07 115 U1 ist eine verschwenkbare Kopfstütze beschrieben, wobei der Polsterkörper mittels einer Sperrklinke in der Gebrauchslage arretierbar ist.

Es ist Aufgabe der Erfindung eine Kopfstütze zu schaffen, die bezüglich ihrer Funktionssicherheit verbessert und bezüglich ihrer Handhabbarkeit und Herstellbarkeit vereinfacht ist.

Die Aufgabe wird gelöst mit den Merkmalen des Anspruchs 1, insbesondere mit den kennzeichnenden Merkmalen.

Das Prinzip der Erfindung besteht im Wesentlichen darin, dass am Polsterträger ein um eine Schwenkachse verschwenkbares Riegelelement angeordnet ist. In der Verriegelungslage wirkt das Riegelelement derart mit einem an der Tragstange befestigten Halteelement zusammen, dass ein Verschwenken des Polsterträgers nicht möglich ist. Durch Verschwenken des Riegelelementes in die Freigabelage geraten das Riegelelement und das Halteelement außer Eingriff, so dass ein Verschwenken des Polsterträgers ermöglicht wird.

"Verriegelungsvorrichtung" im Sinne der Erfindung ist eine Vorrichtung, mit welcher der Polsterträger wenigstens in der Gebrauchsposition lösbar verriegelbar ist. Selbstverständlich besteht auch die Möglichkeit, dass der Polsterträger sowohl in der Gebrauchsals auch in der Nichtgebrauchsposition sowie gegebenenfalls auch in Zwischenpositionen lösbar verriegelbar ist.

Der Vorteil der Erfindung besteht darin, dass es möglich ist, dass Riegelelement so auszubilden, dass der Schwerpunkt sich auf oder in der Nähe der Drehachse befindet. Bei einem Fahrzeug-Crash kann es auf diese Weise nicht durch Trägheitskräfte zu einem ungewollten Bewegen des Riegelelementes in die Freigabelage und damit zu einem Verschwenken des Polsterträgers kommen. Darüber hinaus bietet die erfindungsgemäße Kopfstütze eine hohe Sicherheit, weil mittels des schwenkbaren Riegelelementes hohe Haltekräfte übertragen werden können. Aufgrund des einfachen Aufbaus weist die Kopfstütze eine hohe Funktionssicherheit auf.

Mittels der Drehscheibe ist eine Übersetzung des Betätigungsweges sowie der Betätigungskraft möglich, wobei Betätigungsweg und Betätigungskraft umgekehrt proportional zueinander sind. Mit zunehmendem Abstand vom Schwenklager ist eine geringere Betätigungskraft notwendig, um z.B. einen von einer Feder belasteten Schwenkriegel zu betätigen. Der in einem bestimmten Abstand von der Schwenkachse erforderliche Betätigungsweg zum Verschwenken des Drehriegels ist umso geringer, desto näher die Betätigung an der Drehachse erfolgt.

Die Gefahr des Verklemmens des Riegels, wie sie beispielsweise bei einem translatorisch geführten Riegel auftreten kann, besteht bei der Drehverriegelung nicht. Es müssen daher keine Vorkehrungen getroffen werden, um diesen sogenannten Schubladeneffekt zu vermeiden.

Gemäß der Erfindung ist der Schwerpunkt des Riegelelements auf oder in der Nähe der Drehachse angeordnet ist. Wie bereits oben dargelegt, wird durch diese Ausführungsform ein ungewolltes Verschwenken des Riegelelements verhindert. Auf diese Weise ist es nicht nötig, ein Verschwenken des Riegelelements z.B. durch Federn mit hohen Federkräften zu verhindern.

Einer weiteren Ausgestaltung der Erfindung gemäß ist das Riegelelement von einer Scheibe gebildet. Die Scheibe kann Beispielsweise von einem Blech-Stanzteil gebildet sein. Auf diese Weise ist das Riegelelement einfach herstellbar. Mittels der Außenflächen der Scheibe können große Haltekräfte übertragen werden. Darüber hinaus nimmt die Scheibe lediglich einen geringen Bauraum innerhalb des Polsterträgers ein. Die Scheibe kann zudem derart ausgebildet sein, dass sie ein geringes Gewicht aufweist.

Einer weiteren Ausgestaltung der Erfindung gemäß ist das Riegelelement im Wesentlichen kreisförmig ausgebildet. Auf diese Weise ist es leicht möglich, das Riegelelement so zu gestalten, dass sich der Schwerpunkt auf der Drehachse befindet und somit ein ungewolltes Verschwenken des Riegelelementes, ausgelöst durch Trägheitskräfte, verhindert wird. Z.B. eine kreisförmige Scheibe bildet eine große Außenfläche, an welcher Haltekräfte übertragen werden und Betätigungselemente sowie eine Rückstellfeder angreifen können.

Einer weiteren Ausgestaltung der Erfindung gemäß weist das Halteelement wenigstens eine Anschlagfläche auf, welche in der Verriegelungslage mit mindestens einem Außenflächenbereich des Riegelelements zusammenwirkt. Insbesondere durch eine große Ausgestaltung der Anschlagfläche können große Haltekräfte übertragen werden.

Einer weiteren Ausgestaltung der Erfindung gemäß weist das Halteelement wenigstens eine Aussparung auf, wobei wenigstens eine Innenfläche der Aussparung die Anschlagfläche für das Riegelelement bildet. In der Verriegelungsposition ist das Riegelelement somit innerhalb der Aussparung angeordnet. Die Anschlagfläche des Halteelements und die Gegenfläche des Riegelelements wirken arretierend zusammen. Durch Verschwenken des Riegelelementes wird Letzteres aus der Aussparung herausbewegt, so dass Anschlagfläche und Gegenfläche außer Eingriff bewegt werden und somit ein Verschwenken des Polsterträgers möglich ist.

Gemäß einer weiteren Ausführungsform weist das Riegelelement dem Außenflächenbereich benachbart Ausnehmungen auf. Indem die Ausnehmungen benachbart des Außenflächenbereichs angeordnet sind, muss das Riegelelement nur geringfügig verschwenkt werden, um es zwischen der Verriegelungs- und der Freigabelage zu verstellen. Auch die Betätigungselemente können dann so ausgebildet sein, dass sie lediglich geringe Verstellwege aufweisen.

Einer weiteren Ausführungsform gemäß weist das Riegelelement wenigstens einen Betätigungsbereich auf, welcher zum Verschwenken des Riegelelements mit einem Betätigungselement zusammenwirkt. Der Betätigungsbereich kann beispielsweise von einer Fläche gebildet sein, die mit dem Betätigungselement in Kontakt steht und über die eine Kraftübertragung auf das Riegelelement möglich ist.

Gemäß einer weiteren Ausführungsform ist das Betätigungselement von einem elektromagnetisch betätigten Stößel gebildet. Mittels des Elektromagneten ist es beispielsweise möglich, dass Bewegen des Riegelelements von der Verriegelungs- in die Freigabelage vom Fahrersitz aus vorzunehmen, da die Betätigung des Elektromagneten über ein elektrisches Signal erfolgen kann.

Gemäß einer weiteren Ausgestaltung der Erfindung ist das Betätigungselement von einem translatorisch betätigbaren Schieber gebildet. Mittels des Schiebers ist ein manuelles Betätigen des Riegelelementes möglich. Der Schieber kann beispielsweise entgegen der Kraft eines Federelements betätigbar sein und eine Kraft auf den Betätigungsbereich ausüben, was ein Verschwenken des Riegelelementes zur Folge hat.

Einer weiteren Ausgestaltung der Erfindung gemäß ist dem Riegelelement ein Federelement zugeordnet, wobei das Riegelelement entgegen der Kraft des Federelements von der Verriegelungslage in die Freigabelage bewegbar ist. Das Riegelelement wird auf diese Weise von dem Federelement in der Verriegelungslage gehalten und ist entgegen der Kraft des Federelements in die Freigabelage verschwenkbar.

Weitere Vorteile der Erfindung ergeben sich anhand der Beschreibung eines in den Figuren dargestellten Ausführungsbeispiels. Es zeigen:
Fig. 1 eine Frontansicht der erfindungsgemäßen Kopfstütze in der Gebrauchsposition,
Fig. 2 in Anlehnung an Fig. 1 eine Frontansicht der Kopfstütze in Nichtgebrauchsposition,
Fig. 3 eine Schnittdarstellung der Kopfstütze gemäß Schnittlinie III-III in Fig. 1,
Fig. 4 eine Schnittdarstellung der Kopfstütze gemäß Schnittlinie IV-IV in Fig. 2,
Fig. 5 eine rückwärtige Ansicht der Kopfstütze mit verriegeltem Polsterträger, wobei eine hintere Schale des Polsterträgers nicht dargestellt ist, und
Fig. 6 in Anlehnung an Fig. 5 eine rückwärtige Ansicht der Kopfstütze mit entriegeltem Polsterträger.

Eine Kopfstütze insgesamt wird in den Zeichnungen mit der Bezugsziffer 10 bezeichnet. Gleiche Bezugsziffern in den unterschiedlichen Figuren bezeichnen entsprechende Teile.

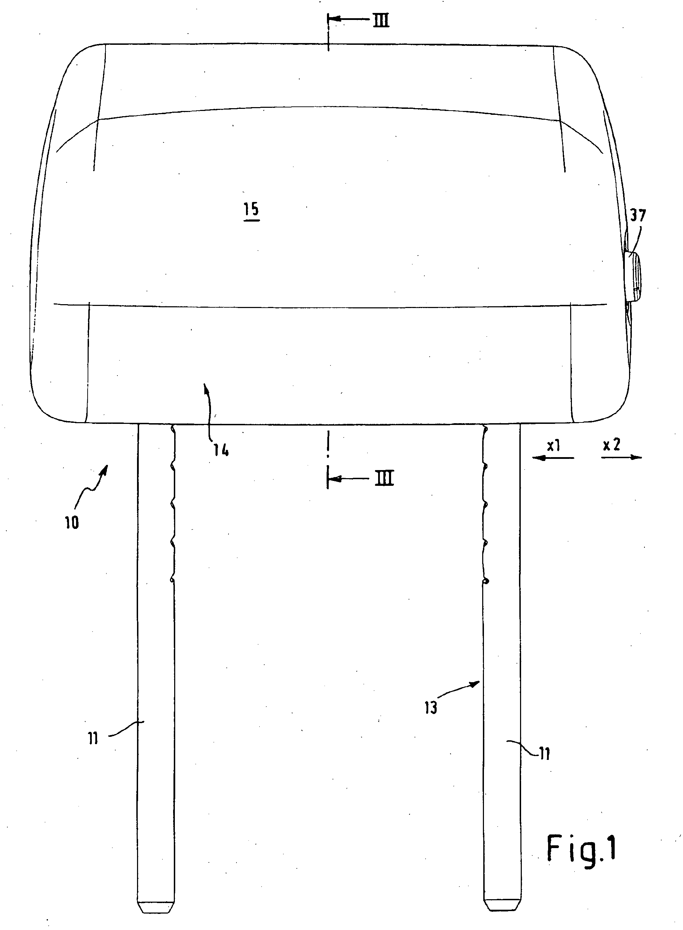

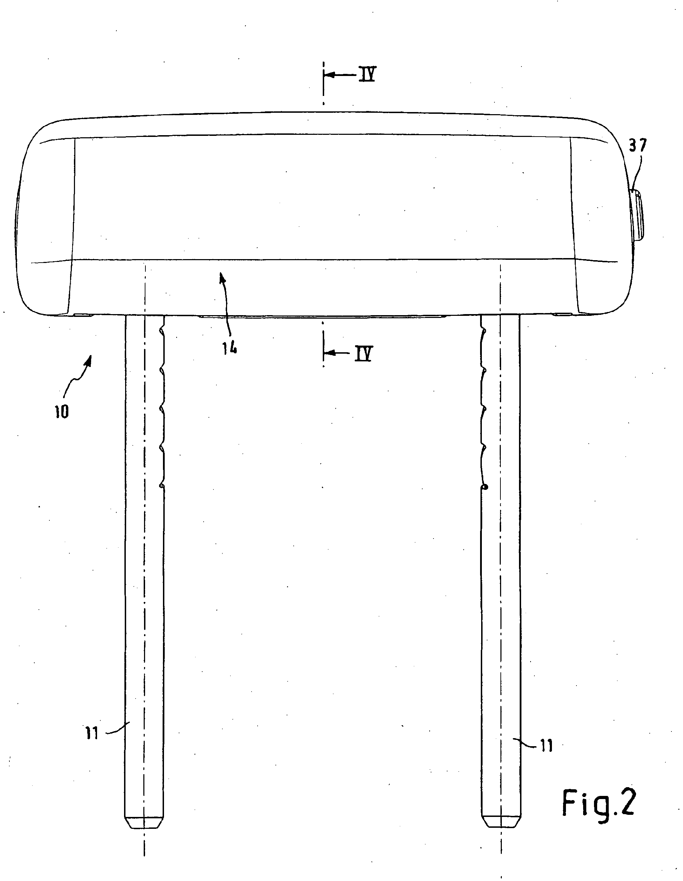

Die Kopfstütze 10 weist gemäß Fig. 1 einen Tragstangenbügel 13 mit freien Tragstangenenden 11 auf. Die freien Tragstangenenden 11 sind in nicht dargestellter Weise an der Rückenlehne eines Fahrzeugsitzes gehalten. An dem Tragstangenbügel 13 ist ein Polsterträger 14 gelagert. In der Gebrauchsposition des Polsterträgers 14 gemäß Fig. 1 dient eine Anlagefläche 15 als Abstützfläche für den Kopf eines nicht dargestellten Fahrzeuginsassen. Der Polsterträger 14 kann von der in Fig. 1 dargestellten Gebrauchsposition in eine Nichtgebrauchsposition gemäß Fig. 2 verschwenkt werden, z.B. um dem Fahrer eine bessere Sicht aus dem Heckfenster zu ermöglichen, wenn sich kein Fahrgast auf einem hinteren Sitz des Fahrzeugs befindet.

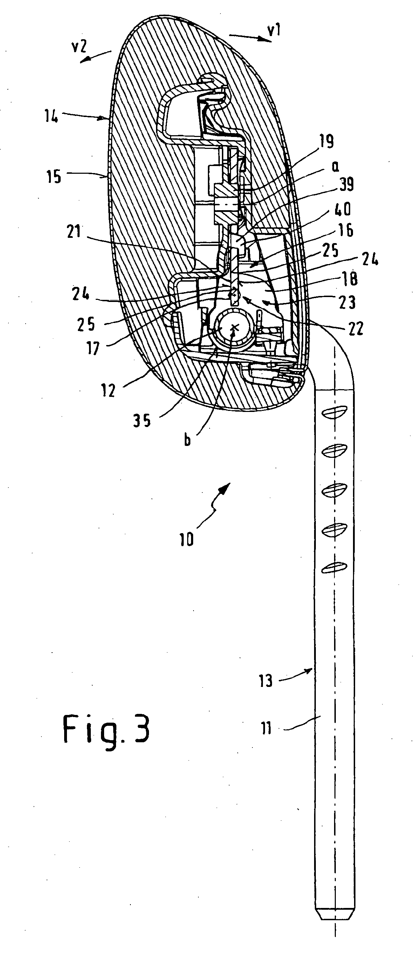

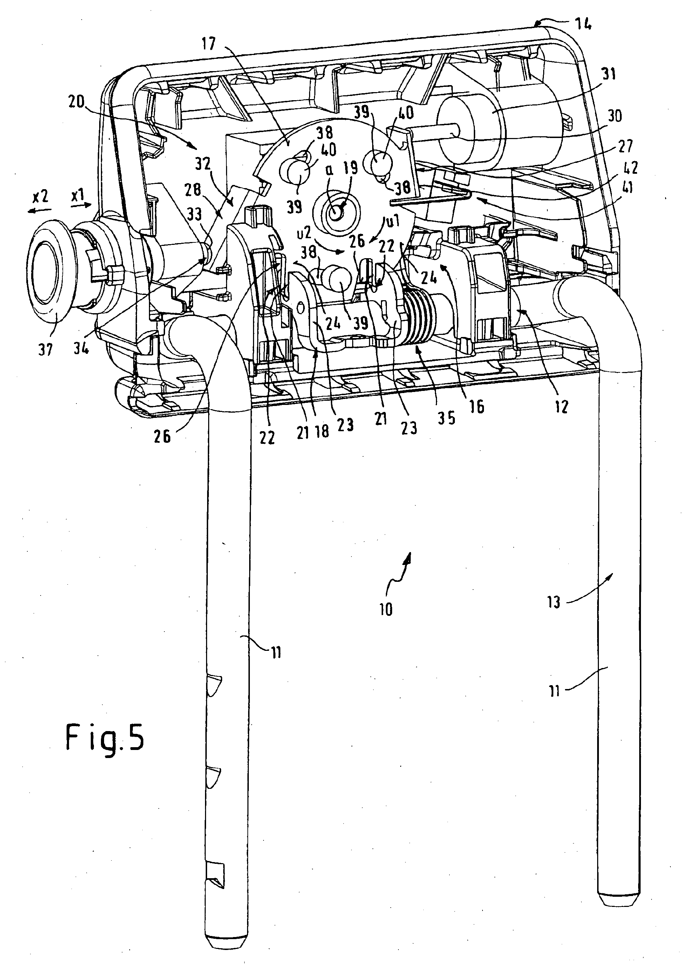

Um ein umgewolltes Verschwenken des Polsterträgers 14 zu verhindern, weist die Kopfstütze 10 gemäß Fig. 3 eine Verriegelungsvorrichtung 16 auf, welche einen scheibenförmigen Drehriegel 17 sowie ein Halteelement 18 umfasst, welches auf einem Quersteg 12 des Tragstangenbügels 13 angeschweißt ist. Der Quersteg 12 bildet eine Schwenkachse b für den Polsterkörper 14. In Fig. 3 ist der Drehriegel 17 in einer Verriegelungslage dargestellt, die im Folgenden anhand von Fig. 5 erläutert wird.

Der Drehriegel 17 ist um eine Achse a drehbar auf einem Achsstummel 19 gelagert, welcher an einer Montageplatte 20 befestigt ist. Die Montageplatte 20 ist in nicht dargestellter Weise an dem Polsterträger 14 befestigt. In der Verriegelungslage des Drehriegels 17 gemäß Fig. 5, durchgreifen Drehriegelabschnitte 21 Aussparungen 22 von Armen 23 des bügelförmigen Halteelements 18. Gemäß Fig. 3 bilden Außenflächen 24 der Drehriegelabschnitte 21 Anschlagflächen, die mit Gegenflächen 25 zusammenwirken, welche von Innenflächen der Aussparungen 22 gebildet werden. Der Polsterträger kann daher weder in Schwenkrichtung v1 noch in Schwenkrichtung v2 (siehe Fig. 3) verschwenkt werden.

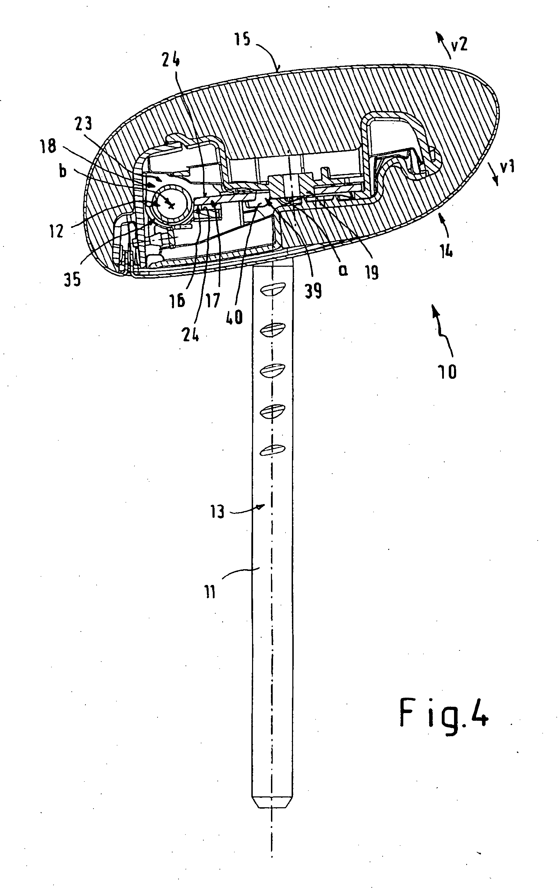

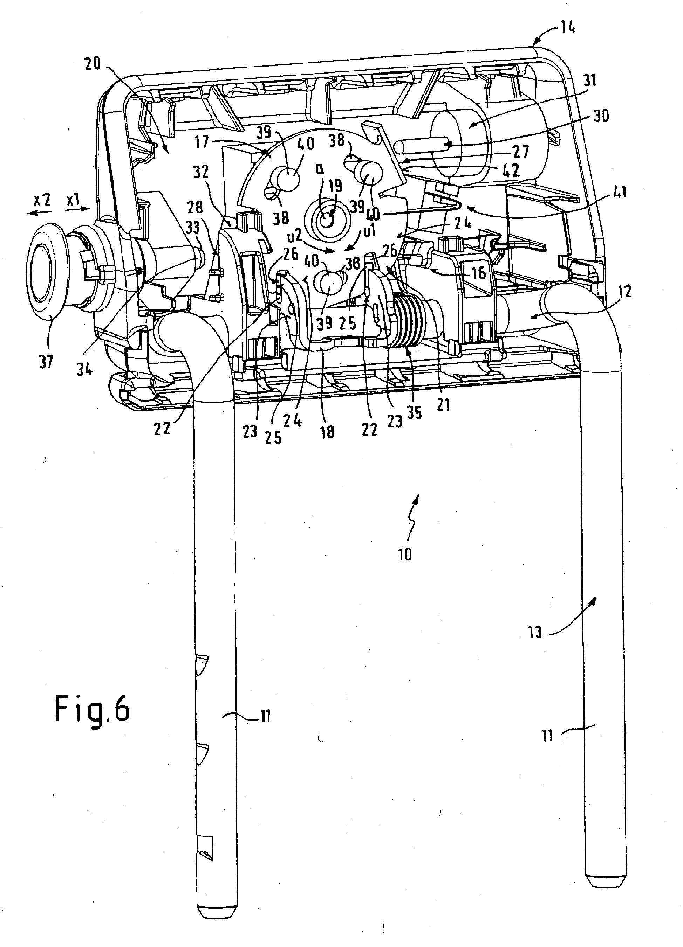

Durch Verschwenken des Drehriegels 17 gemäß Fig. 5 in Richtung u2 gelangen die Außenflächen 24 des Drehriegels 17 gemäß Fig. 6 außer Eingriff mit den Gegenflächen 25 der Haltearme 23. In der Freigabelage des Drehriegels 17 gemäß Fig. 6 sind den Drehriegelabschnitten 21 benachbarte Aussparungen 26 den Gegenflächen 25 der Haltearme 23 gegenüberliegend angeordnet. Da die Gegenflächen 25 der Haltearme 23 in der Position des Drehriegels 17 gemäß Fig. 6 nicht mehr in der Bewegungsbahn des Drehriegels 17 angeordnet sind, ist ein Verschwenken des Polsterträgers 14 um die Drehachse b (siehe Fig. 3) möglich. Der Polsterträger 14 wird in der Freigabelage des Drehriegels 17 von einem Federelement 35 aus der Gebrauchsposition gemäß Fig. 3 nach hinten in die Nichtgebrauchsposition gemäß Fig. 4 verschwenkt. Alternativ wäre es gemäß einem anderen nicht dargestellten Ausführungsbeispiel ebenfalls denkbar, den Polsterträger in Richtung v2 nach vorn umzuschwenken.

Der Drehriegel 17 wird von einem Federelement 41 in Schwenkrichtung u1 belastet. Nach einem Verschwenken des Polsterträgers 14 entgegen der Federkraft des Federelements 35 von der Nichtgebrauchsposition gemäß Fig. 4 in die Gebrauchsposition wird der Drehriegel 17 daher in der Gebrauchsposition des Polsterträgers 14 gemäß Fig. 5 von dem Federelement 41 in Richtung u1 in die oben beschriebene Verriegelungslage verschwenkt.

Um eine Übertragung großer Kräfte, wie sie im Crash Fall auf den Polsterkörper 14 einwirken, zu ermöglichen, weist der Drehriegel 17 bezüglich der Drehachse a radial außen angeordnete Langlöcher 38 auf, welche von Zapfen 39 durchgriffen werden. Die Zapfen 29 sind in nicht dargestellter Weise am Polsterträger 14 befestigt und weisen an ihrem freien Ende Verdickungen 40 auf, welche den Drehriegel 17 auch bei hohen Belastungen fest in der in Fig. 5 dargestellten Position halten. Die Langlöcher 38 erlauben das Verschwenken des Drehriegels 17 zwischen der Verriegelungslage und der Freigabelage. Anstelle der Zapfen könnten z.B. alternativ auch Formteile, die mittelbar oder unmittelbar am Kopfkasten befestigt sind, den Drehriegel stützen. Die Formteile könnten z.B. Gleitflächen aufweisen, die mit der Außenfläche des Drehriegels 17 zusammenwirken.

Um den Drehriegel 17 in Richtung u2 in die Freigabelage verschwenken zu können, weist der Drehriegel 17 einen Betätigungsabschnitt 27 und einen weiteren Betätigungsabschnitt 28 auf. Der Betätigungsabschnitt 27 weist eine Gleitfläche 42 auf, welche mit einem Stößel 30 eines Elektromagneten 31 zusammenwirkt. Der Stößel 30 ist also nicht fest mit dem Betätigungsabschnitt 27 verbunden, sondern kann auf der Gleitfläche 42 entlanggleiten. Durch Bewegen des Stößels 30 in Richtung x2 gemäß Fig. 5 wird der Drehriegel 17 entgegen der Kraft des Federelementes 41 in Richtung u2 in die Freigabelage bewegt. Der Polsterträger 14 wird dann in oben beschriebener Weise von dem Federelement 35 in die Nichtgebrauchsposition verschwenkt. Der Elektromagnet 31 ist beispielsweise vom Armaturenbrett aus betätigbar, so dass der Polsterträger 14 eines hinteren Fahrzeugsitzes auch vom Fahrer in die Nichtgebrauchsposition verschwenkbar ist.

Mittels des Druckknopfes 37 lässt sich der Drehriegel 17 auch manuell in die Freigabelage verschwenken. Der Betätigungsabschnitt 28 des Drehriegels 17 weist eine Gleitfläche 32 auf, die mit der Stirnfläche 33 eines Schiebers 34 zusammenwirkt. Der Schieber 34 ist nicht fest mit dem Betätigungsabschnitt 28 verbunden. Die Stirnfläche 33 kann auf der Gleitfläche 32 entlanggleiten. Der Schieber 34 ist entgegen der Kraft eines nicht dargestellten Federelements aus der Position gemäß Fig. 5 in Richtung x1 bewegbar, wobei die Stirnfläche 33 eine Kraft auf die Gleitfläche 32 des Drehriegels 17 ausübt und der Drehriegel 17 hierdurch in Richtung u2 in die Freigabelage verschwenkt wird. Bei nachlassendem Druck auf den Schieber 34 wird dieser von dem nicht dargestellten Federelement in Richtung x2 bewegt.

## Patentansprüche

1. Kopfstütze für Fahrzeuge, mit einem Polsterträger (14), welcher zwischen einer Gebrauchsposition und einer Nichtgebrauchsposition verschwenkbar an wenigstens einer Tragstange (11) gelagert ist, und mit einer wenigstens ein Riegelelement (17) aufweisenden Verriegelungsvorrichtung (16), wobei das Riegelelement (17) zwischen einer den Polsterträger (14) schwenkarretierenden Verriegelungslage, in welcher das Riegelelement (17) mit einem tragstangenseitig befestigten Halteelement (18) zusammenwirkt, und einer das Verschwenken ermöglichenden Freigabelage verstellbar ist, wobei das Riegelelement (17) um eine am Polsterträger (14) angeordnete Drehachse (a) schwenkbar gelagert ist, und wobei die Verriegelungslage einer ersten Schwenkposition, und die Freigabelage einer zweiten Schwenkposition zugeordnet ist, **dadurch gekennzeichnet, dass** der Schwerpunkt des Riegelelements (17) im Wesentlichen auf der Drehachse (a) oder nahe der Drehachse (a) angeordnet ist.

2. Kopfstütze nach Anspruch 1, **dadurch gekennzeichnet, dass** das Riegelelement (17) im Wesentlichen symmetrisch zu der Drehachse (a) ausgebildet ist.

3. Kopfstütze nach einem der Ansprüche 1 oder 2, **dadurch gekennzeichnet, dass** das Riegelelement (17) von einer Scheibe gebildet ist.

4. Kopfstütze nach einem der vorangehenden Ansprüche, **dadurch gekennzeichnet, dass** das Riegelelement (17) im Wesentlichen kreisförmig ausgebildet ist.

5. Kopfstütze nach einem der vorangehenden Ansprüche, **dadurch gekennzeichnet, dass** das Halteelement (18) wenigstens eine Anschlagfläche (25) aufweist, welche in der Verriegelungslage mit mindestens einem Flächenbereich (24) des Riegelelements (17) zusammenwirkt.

6. Kopfstütze nach Anspruch 5, **dadurch gekennzeichnet, dass** das Halteelement (18) wenigstens eine Aussparung (22) aufweist, und dass wenigstens eine Innenfläche der Aussparung (22) die Anschlagfläche (25) für das Riegelelement (17) bildet.

7. Kopfstütze nach einem der Ansprüche 5 oder 6, **dadurch gekennzeichnet, dass** das Riegelelement (17) dem Flächenbereich (24) benachbart Ausnehmungen (26) aufweist.

8. Kopfstütze nach einem der vorangehenden Ansprüche, **dadurch gekennzeichnet, dass** dem Riegelelement (17) ein Federelement (41) zugeordnet ist und dass Riegelelement (17) entgegen der Rückstellkraft des Federelements (41) von der Verriegelungslage in die Freigabelage bewegbar ist.

9. Kopfstütze nach einem der vorangehenden Ansprüche, **dadurch gekennzeichnet, dass** das Riegelelement (17) wenigstens einen Betätigungsbereich (27, 28) aufweist, welcher zum Verschwenken des Riegelelements (17) mittelbar oder unmittelbar mit einer Betätigungsvorrichtung (31, 34) zusammenwirkt.

10. Kopfstütze nach Anspruch 9 **dadurch gekennzeichnet, dass** die Betätigungsvorrichtung von einem elektromagnetisch betätigtem Stößel (30) gebildet ist.

11. Kopfstütze nach Anspruch 9, **dadurch gekennzeichnet, dass** die Betätigungsvorrichtung von einem translatorisch bewegbaren Schieber (34) gebildet ist.

## Claims

1. Headrest for vehicles, having a cushion-carrier (14) which is mounted on at least one carrying bar (11) so as to be tiltable between a position of use and an out-of-use position, and having an interlocking device (16) having at least one locking element (17), wherein said locking element (17) can be adjusted between an interlocking location which arrests the cushion-carrier (14) in respect of swivelling and in which said locking element (17) interacts with a retaining element (18) fastened on the carrying bar, and a releasing location which permits tilting, wherein the locking element (17) is mounted so as to be swivellable about a pivot (a) arranged on the cushion-carrier (14), and wherein the interlocking location is associated with a first swivelling position, and the releasing location is associated with a second swivelling position,
**characterised in that** the centre of gravity of the locking element (17) is arranged substantially on the pivot (a) or close to said pivot (a).

2. Headrest according to Claim 1, **characterised in that** the locking element (17) is constructed so as to be substantially symmetrical in relation to the pivot (a).

3. Headrest according to either of Claims 1 or 2, **characterised in that** the locking element (17) is formed by a disc.

4. Headrest according to one of the preceding claims, **characterised in that** the locking element (17) is of substantially circular construction.

5. Headrest according to one of the preceding claims, **characterised in that** the retaining element (18) has at least one stop face (25) which, in the interlocking location, interacts with at least one laminar region (24) of the locking element (17).

6. Headrest according to Claim 5, **characterised in that** the retaining element (18) has at least one clearance (22), and that at least one inner face of said clearance (22) forms the stop face (25) for the locking element (17).

7. Headrest according to either of Claims 5 or 6, **characterised in that** the locking element (17) has clearances (26) adjacent to the laminar region (24).

8. Headrest according to one of the preceding claims, **characterised in that** a spring element (41) is associated with the locking element (17), and that said locking element (17) can be moved from the interlocking location into the releasing location against the restoring force of said spring element (41).

9. Headrest according to one of the preceding claims, **characterised in that** the locking element (17) has at least one actuating region (27, 28) which interacts indirectly or directly with an actuating device (31, 34) for the purpose of tilting said locking element (17).

10. Headrest according to Claim 9, **characterised in that** the actuating device is formed by an electromagnetically actuated ram (30).

11. Headrest according to Claim 9, **characterised in that** the actuating device is formed by a slide (34) which can be moved in a translatory manner.

## Revendications

1. Appui-tête pour des véhicules automobiles, avec un support de rembourrage (14) lequel est placé pouvant pivoter entre une position d'utilisation et une position de repos au niveau d'au moins une barre de support (11), et avec un dispositif de verrouillage (16) comprenant au moins un élément de verrouillage (17), l'élément de verrouillage (17) étant réglable entre une position de verrouillage stoppant le pivotement du support de rembourrage (14), dans laquelle l'élément de verrouillage (17) concoure avec un élément de maintien (18) fixé côté barre de support, et une position libre permettant le pivotement, l'élément de verrouillage (17) étant placé pivotant autour d'un axe de rotation (a) disposé au niveau du support de rembourrage (14) et la position de verrouillage étant associée à une première position de pivotement et la position libre à une deuxième position de pivotement, **caractérisé en ce que** le centre de gravité de l'élément de verrouillage (17) est disposé essentiellement sur l'axe de rotation (a) ou proche de l'axe de rotation (a).

2. Appui-tête selon la revendication 1, **caractérisé en ce que** l'élément de verrouillage (17) est conçu essentiellement symétriquement à l'axe de rotation (a).

3. Appui-tête selon l'une des revendications 1 ou 2, **caractérisé en ce que** l'élément de verrouillage (17) est formé d'un disque.

4. Appui-tête selon l'une des précédentes revendications, **caractérisé en ce que** l'élément de verrouillage (17) est conçu essentiellement de forme circulaire.

5. Appui-tête selon l'une des précédentes revendications, **caractérisé en ce que** l'élément de maintien (18) comporte au moins une face de butée (25), laquelle concoure dans la position de verrouillage avec au moins une zone de surface (24) de l'élément de verrouillage (17).

6. Appui-tête selon la revendication 5, **caractérisé en ce que** l'élément de maintien (18) comporte au moins un évidement (22), et **en ce qu'**au moins une face intérieure de l'évidement (22) forme la face de butée (25) pour l'élément de verrouillage (17).

7. Appui-tête selon l'une des revendications 5 ou 6, **caractérisé en ce que** l'élément de verrouillage (17) présente des évidements (26) adjacents à la zone de surface (24).

8. Appui-tête selon l'une des précédentes revendications, **caractérisé en ce qu'**un élément ressort (41) est associé à l'élément de verrouillage (17) et **en ce que** l'élément de verrouillage (17) est mobile à l'opposé de la force de rappel de l'élément ressort (41) de la position de verrouillage dans la position libre.

9. Appui-tête selon l'une des précédentes revendications, **caractérisé en ce que** l'élément de verrouillage (17) comporte au moins une zone d'actionnement (27, 28) qui concoure pour le pivotement de l'élément de verrouillage (17) directement ou indirectement avec un dispositif d'actionnement (31, 34).

10. Appui-tête selon la revendication 9, **caractérisé en ce que** le dispositif d'actionnement est formé d'un poussoir (30) actionné électro-magnétiquement.

11. Appui-tête selon la revendication 9, **caractérisé en ce que** le dispositif d'actionnement est formé d'un coulisseau (34) mobile en translation.
